# EUROPEAN PATENT SPECIFICATION

(11) **EP 2 668 408 B1**
(45) Date of publication and mention of the grant of the patent: **20.01.2016**
(21) Application number: 12701660.8
(22) Date of filing: 24.01.2012
(51) Int. Cl.: F16B 37/08

(54) **QUICK-NUT EXTRACTION**
SCHNELLE MUTTERNEXTRAKTION
EXTRACTION D'ÉCROU RAPIDE

(30) Priority: 24.01.2011 DE 102011010036
(43) Date of publication of application: 04.12.2013
(73) Proprietor: Illinois Tool Works Inc., Glenview, IL 60025 (US)
(72) Inventor: SCHERER, Christian, DE-97990 Weikersheim (DE)
(74) Representative: Hauck Patentanwaltspartnerschaft mbB
(86) International application number: PCT/US2012/022329
(87) International publication number: WO 2012/103068

(56) References cited:
- EP-A1- 0 408 239
- DE-C1- 10 064 530

## Description

The invention relates to a device for fastening a component on a carrier component, wherein the component comprises a through opening and the carrier component comprises a fastening projection being guidable through the through opening. For example, cowling parts are fastened on a body part of an automobile using these types of devices. As a rule, several fastening projections, for example fastening bolts, are arranged, for example welded, on the body part for this purpose. In the case of known devices, the cowling part to be fastened on the body part is pushed on the fastening bolt or fastening bolts by way of its through opening or through openings. These types of fastening bolts can be provided, for example, with an outer thread. A nut or the like is then screwed onto the fastening bolt or fastening bolts such that the component is held between the carrier component and the nut screwed onto the fastening bolt. Using such devices, it is possible to retain the components on the carrier component in operation at high retaining forces. The manner of the mounting of the known devices by means of screw connection, however, is time-consuming.

From DE 100 64 530 C1 a quick fastening thread consisting of a sleeve and clasp part, protruding catch and holder, with a basic inner thread is known. The sleeve and clasp parts are lockable in a preliminary and basic position. Further, from EP 0 408 239 A1 a quick fastening nut is known for location on an associated bolt with a plurality of internally threaded, arcuate segments, each including a part-frustoconical portion and guide means reacting between the segments.

Proceeding from the prior art explained, the object underlying the invention is to provide a device of the aforementioned type, with which simple and rapid mounting is possible at high retaining forces.

This object is achieved by the invention by the object of claim 1. Advantageous developments are to be found in the dependent claims, the description and the figures.

The object is achieved by the invention by a device for fastening a component on a carrier component, wherein the component comprises a through opening and the carrier component comprises a fastening projection being guidable through the through opening,
- comprising a first fastening element and a second fastening element, wherein first and second fastening elements can be preliminarily connected together and in the state preliminarily connected together form a reception, with which they can be placed on the fastening projection when the fastening projection of the carrier component is guided through the opening of the component, and wherein at least one of the fastening elements comprises at least one contacting surface,
- wherein the reception for the fastening projection reduces when a pressure is exerted on the at least one contacting surface when the fastening elements being preliminarily connected together are placed on the fastening projection, so that the fastening elements are fastened on the fastening projection.

The carrier component can be a body part of an automobile, for example. The component to be fastened thereon can be a flat component, for example a cowling part to be fastened on the body part. The carrier component and the component can be part of the device as claimed in the invention. The contacting surface of the fastening element or fastening elements can be provided, in particular, only on one of the fastening elements such that said fastening element is pushed, for example, into the other fastening element when a pressure is exerted onto the contacting surface for the final mounting.

As claimed in the invention, particularly simple mounting of the device is made possible by the fastening elements being able to be placed onto the fastening projection of the carrier component in their state preliminarily connected together. The final mounting can then be effected in a simple manner by means of an exertion of pressure onto the contacting surface. The device does not have to be screwed on for this purpose. Time saving during the mounting procedure is achieved as a result. In addition, mounting is possible using a small amount of force. At the same time very high retaining forces are achieved with the device in particular on account of the cross locking of the fastening elements on the fastening projection. The device has a sturdy design which is able to compensate for high fitting tolerances.

Several fastening projections can obviously be provided on the carrier component. In a corresponding manner, the component to be fastened can have several through openings associated with the projections. A device as claimed in the invention can then be provided for each fastening projection. The fastening elements can be realized in each case in one piece. They can be produced from a plastics material, for example. As a result, the device is able to be realized in a particularly weight-saving manner. According to one development that is particularly appropriate in practice, the fastening elements are able to lock together in their preliminarily connected together state. In addition, the first and second fastening elements can be pushed into one another for the preliminary connection.

The device can further comprise a fastening tool, which can be pushed onto the at least one contacting surface for fastening the fastening elements on the fastening projection when the fastening elements being preliminarily connected together are placed on the fastening projection. This exertion of pressure by the fastening tool then brings about the reduction of the reception of the fastening elements. The fastening tool allows for particularly simple and rapid mounting. The fastening tool can consist of a plastics material. The fastening tool can also be pushed onto the fastening elements in the direction of the carrier component. The fastening elements can then be further pushed into one another upon pushing of the fastening tool. The fastening tool can be pushed onto the fastening elements, in particular perpendicular to the surface of the component or carrier component, for example in the axial direction of a fastening bolt as fastening projection. This movement of the fastening tool can generate a movement of the fastening elements towards each other in a direction perpendicular to the direction of movement of the fastening tool. For example, the fastening tool can be moved in the vertical direction for the mounting procedure and as a result can generate a horizontal movement of the fastening elements.

The fastening elements are able to lock together in the finally mounted state being fastened on the fastening projection. In the finally mounted state, therefore, a locking of the fastening elements can be effected which brings about a fixed retaining of the fastening elements and consequently of the component on the carrier component.

As claimed in a further development, the at least one contacting surface can comprise at least one surface being inclined with regard to the insertion direction of the fastening projection into the reception of the fastening elements or at least one conical surface. An inclined surface in this context also includes a surface that is formed in a concave or convex manner, in particular inclined in a concave or convex manner. The contacting surface or contacting surfaces is/are inclined in particular in such a manner that the cross section of the preliminarily connected together fastening elements reduces when seen in the direction of insertion of the fastening projection into the reception of the fastening elements. In this way, when placed onto the preliminarily connected together fastening elements, the fastening tool can initially come into contact with the contacting surface or contacting surfaces and when placed on further, as a result of the inclination of the contacting surface or surfaces, can push the fastening elements further into one another. Several such inclined or conical contacting surfaces can be provided in particular.

As claimed in a development that is particularly appropriate in practice, the fastening projection can be a fastening bolt. In addition, the fastening projection can comprise an outer thread or at least one locking element, wherein at least one of the fastening elements engages with the outer thread or the at least one fastening projection in the state being fastened on the fastening projection. In principle, arbitrary fastening projections are conceivable, for example fastening bolts. However, it is also conceivable for the fastening projections to be mushroom-shaped, spherical or T-shaped. For example, the fastening projections can have a coarse thread, a fine groove or other locking elements. At least one of the fastening elements can then have a corresponding inner thread or corresponding locking elements, by way of which it engages with the outer thread or the locking elements of the fastening projection. The locking elements are locking projections and locking receptions, for example. In the case of this development, self-adjustment of the fastening elements is effected in a direction perpendicular to the insertion direction of the fastening projection into the reception of the fastening elements (for example in the horizontal direction). In particular, when pushed further into one another by means of the fastening tool, the fastening elements automatically move into engagement with the outer thread or the locking elements.

The advantage of locking elements compared to an inner or outer thread is that no unwanted automatic demounting caused by vibrations occurring during the operation, for example of an automobile, can be effected. Contrary to this, the combination of an inner and outer thread allows for simple and destruction-free demounting. In a corresponding manner as claimed in a further development, it can be provided that the fastening elements can be screwed off the fastening projection for the demounting of the component. The screwing off can be effected, in particular, in the state being finally connected together. The fastening tool can be in the shape of a ring such that when the fastening tool is placed onto the fastening elements, a particularly simple and self-adjusting pushing into one another of the fastening elements into the finally mounted position is possible. The fastening element can be in the form of a polygonal ring, for example (for example a hexagonal ring). One or both fastening elements can then be provided, for example, with a corresponding polygonal reception (for example a hexagonal reception) which can be moved into engagement with the polygonal ring for demounting. In the case of such a development, the demounting is able to be effected in a particularly simple manner using the (standard) fastening tool, by said fastening tool being placed onto the fastening elements and then, by rotating the fastening tool, the fastening elements being screwed off the fastening projection.

The first and/or the second fastening element comprise a contacting surface for contacting a first surface of the component. By way of this contacting surface, the first and/or second fastening element can contact the first surface of the component with the fastening projection of the carrier part guided through the opening of the component and in the state placed on the fastening projection. The contacting surface is formed by a resiliently elastic contacting disk. This development enables tolerance compensation in the insertion direction of the fastening projection into the reception (for example in the vertical direction).

As claimed in a further development, it can be provided that the device further comprises a holding disk with a through opening for the fastening projection and with a contacting surface for contacting a second surface of the component being opposite to the first surface, wherein preliminary connecting means are provided, with which the fastening elements in the state being preliminarily connected together and the holding disk can be preliminarily connected together without the fastening projection, each in the state contacting the component. The preliminary connecting means can comprise a locking connection. It can additionally be provided that the first and/or the second fastening element comprises an insertion section with a through opening and with at least one locking element and in that the holding disk comprises an insertion section with a through opening and with at least one locking element corresponding to the at least one locking element of the insertion section of the first and/or second fastening element, wherein the insertion section of the first and/or second fastening element and the insertion section of the holding disk can be inserted into one another, wherein the locking elements lock with one another for preliminarily connecting the fastening elements and the holding disk. The insertion sections can be cylindrical.

This development makes it possible to pre-assemble the fastening elements on the component. The component with the fastening elements and the retaining disk can be placed on the fastening projection of the carrier component in this manner. This means that the mounting of the device is further simplified.

An exemplary embodiment of the invention is explained in more detail below by way of figures, in which, in a schematic manner:
- figure 1: shows a perspective view of a first fastening element of a device as claimed in the invention according to a first exemplary embodiment,
- figure 2: shows a side view of the fastening element from figure 1,
- figure 3: shows a perspective view of a second fastening element of a device as claimed in the invention according to the first exemplary embodiment,
- figure 4: shows a top view of the fastening element from figure 3,
- figure 5: shows a perspective view of the fastening elements from figures 1 to 4 in a state preliminarily connected together,
- figure 6: shows a sectional view of the device as claimed in the invention according to the first exemplary embodiment in a first mounting state,
- figure 7: shows a sectional view of the device from figure 6 in a second mounting state,
- figure 8: shows a sectional view of the device from figure 6 in a third mounting state,
- figure 9: shows a side view of a first and second fastening element of a device as claimed in the invention according to a second exemplary embodiment in a state preliminarily connected together,
- figure 10: shows a side view of a holding disk of a device as claimed in the invention according to the second exemplary embodiment,
- figure 11: shows a perspective view of the device as claimed in the invention according to the second exemplary embodiment in a first mounting state,
- figure 12: shows a perspective view of the device from figure 11 in a second mounting state.

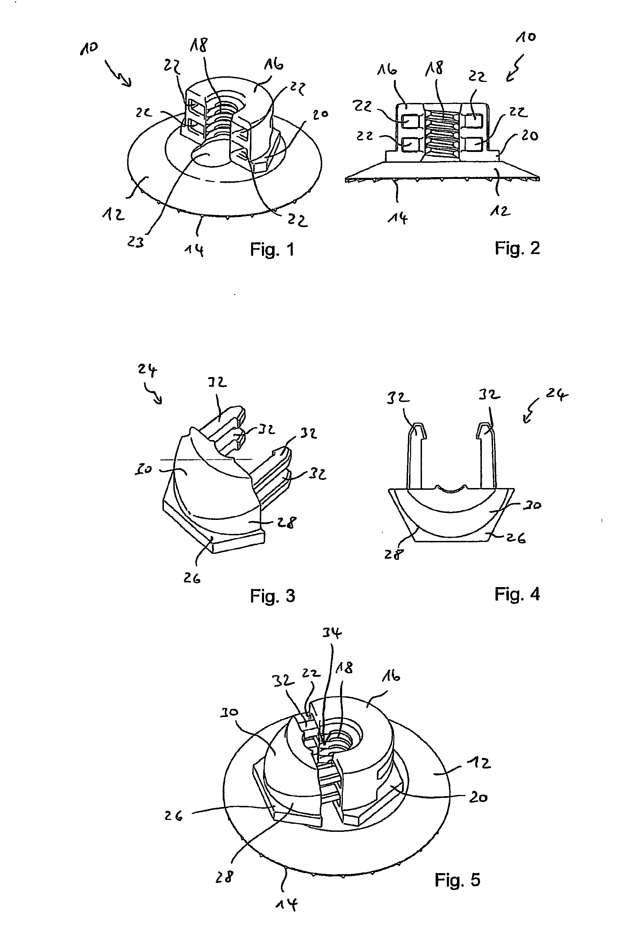

In so far as nothing to the contrary is specified, identical references in the figures refer to identical objects. Figures 1 and 2 show a first fastening element 10 of a device as claimed in the invention according to a first exemplary embodiment. The fastening element 10 has an elastic contacting disk 12, which is circular in top view and has several contacting projections 14 arranged distributed on its under side. The contacting projections 14 serve for contacting a component, for example a cowling part, to be fastened on a carrier component, for example on a body part of an automobile. On the side opposite the contacting projections 14, a hollow cylindrical open section 16 extends proceeding from the contacting disk 12. On its inner side, the hollow cylindrical section 16 is provided with an inner thread 18. At the transition between the hollow cylindrical section 16 and the contacting disk 12, there is also part of a hexagonal reception 20. In the example shown, four locking receptions 22, which are substantially rectangular in cross section, are also realized in the open sides of the hollow cylindrical section 16. A central through opening 23 is also provided in the contacting disk 12. Figures 3 and 4 show a second fastening element 24. The second fastening element 24 also has part of a hexagonal reception 26 on the under side thereof. A contacting section 28 with an inclined contacting surface 30 extends proceeding from part of the hexagonal reception 26. In particular, the cross section of the second fastening element 24 proceeding from the hexagonal reception 26 is tapered. In the example shown, four locking arms 32 also extend proceeding from the contacting section 28. The first and second fastening elements 10, 24 shown in figures 1 to 4 have been produced from a plastics material, in each case in one piece, in an injection molding procedure.

Figure 5 shows the preliminarily connected together state of the fastening elements 10 and 24 from figures 1 to 4. To achieve this state, the second fastening element 24 with its locking arms 32 has been pushed laterally into the locking receptions 22 of the first fastening element 10. In this preliminarily connected together state, the locking arms 32 can be preliminarily locked in the locking receptions 22. It can be seen that in the preliminarily mounted state, a continuous reception opening 34 is formed by the fastening elements 10, 24. It can also be seen that a complete hexagonal reception is formed by the hexagonal sections 20, 26 apart from a small space still existing in the preliminarily mounted state.

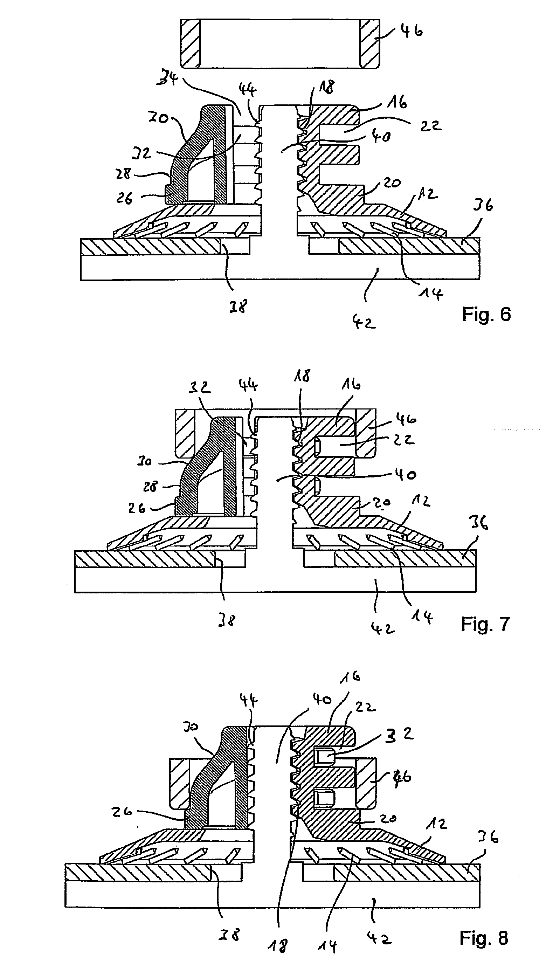

The fastening of a flat component 36 with a through opening 38, in the present case a cowling part 36, to a carrier component 42, in the present case a body part 42 of an automobile, provided with a fastening projection 40, in this case a fastening bolt 40, is now to be explained by way of figures 6 to 8. In the example shown, the fastening bolt 40 has an outer thread 44. For mounting, the component 36 with its through opening 38 is initially placed onto the fastening bolt 40, the component 36 contacting the carrier component 42. As shown in figure 6, the first and second fastening elements 10, 24 are then placed from above onto the component 36 in the preliminarily mounted state shown in figure 5, the fastening bolt 40 passing into the reception 34 of the fastening elements 10, 24. A ring-shaped fastening tool 46 shown in figure 6 is then used for the final mounting. As can be seen in figure 7, said fastening tool is pushed from above onto the fastening elements 10, 24, the under side of the fastening tool 46 coming into contact with the inclined contacting surface 30 of the second fastening element 24. As a result of the inclination of the contacting surface 30, when, in figure 7, the fastening tool 46 is pushed further downward vertically, this results, in figure 7, in a horizontal movement of the second fastening element 24 and consequently in the second fastening element 24 being pushed further into the first fastening element 10. If the fastening tool 46 is then pushed further down, as shown in figure 8, the second fastening element 24 is also pushed further in a corresponding manner into the first fastening element 10 as far as the finally mounted state shown in figure 8. The inner thread 18 engages with the outer thread 44 of the fastening bolt 40 no later than at this point. At the same time, the locking arms 32 with the locking sections realized in each case at their free ends move into a locking position in the locking receptions 22 of the first fastening element 10. In this finally mounted state, the diameter of the reception 34 of the fastening elements 10, 24 is reduced to the diameter of the fastening bolt 40. As a result of the locking of the second fastening element 24 in the first fastening element 10, the fastening tool 46 can then be removed upward from the device without the fastening elements 10, 24 being able to become detached from one another again. The component 36 is retained fixedly on the carrier component 42 in this state. The elastic contacting disk 12 with its contacting projections 14, in this case, allows for tolerance compensation in the vertical direction.

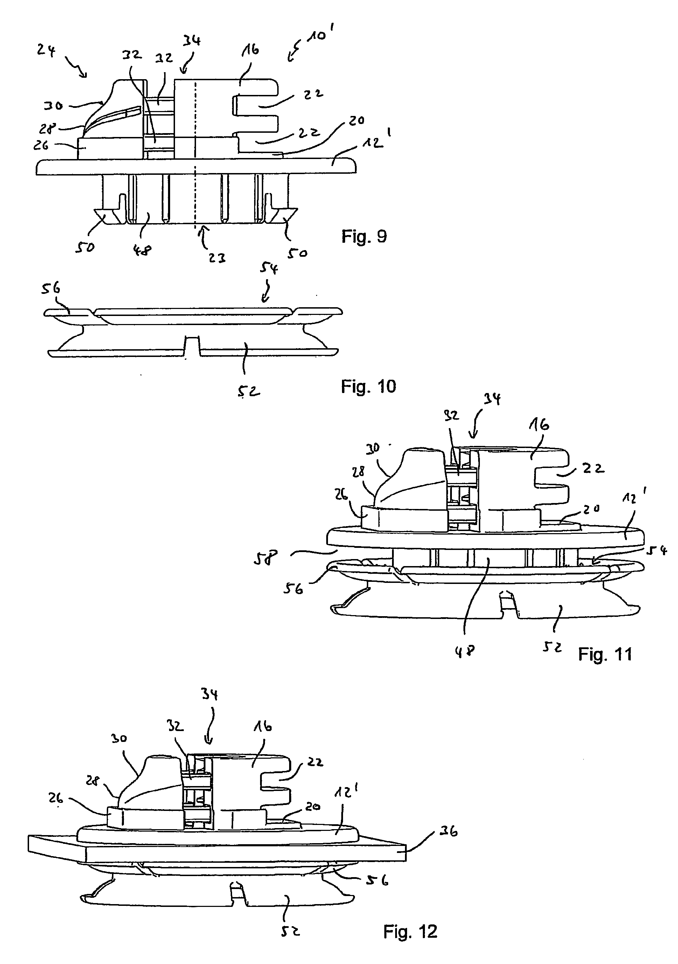

It must be pointed out again that the hexagonal sections 26, 20 together form a complete hexagonal reception in the finally mounted state shown in figure 8. If the fastening tool 46 is realized, for example, as a hexagonal ring, the device is able to be demounted out of the position shown in figure 8 in a simple manner by screwing off the fastening elements 10, 24 from the fastening bolt 40 using this fastening tool 46. Figures 9 to 12 show a device as claimed in the invention according to a second exemplary embodiment. The device according to this exemplary embodiment once again has a first fastening element 10', which in further parts is realized in an identical manner to the fastening element 10 shown in figures 1 and 2. Over and above this, the device according to figures 9 to 12 has a second fastening element 24, which is realized in an identical manner to the fastening element 24 shown in figures 3 and 4. In figure 9, the fastening elements 10', 24 are shown in their preliminarily connected together state. The preliminary connection is effected in an analogous manner to the manner explained above in regard to figures 1 to 5 such that reference is to be made thereto.

The first fastening element 10' according to figures 9 to 12 differs from the first fastening element 10 according to figures 1 and 2 on the one hand in that the contacting disk 12' of the first fastening element 10' from figures 9 to 12 has no contacting projections and is not realized in a resilient manner. It differs over and above this in that proceeding from the contacting disk 12' in figure 9, a hollow cylindrical insertion section 48 extends downward in figure 9. Several locking projections 50 are realized on the free end of the insertion section 48. Over and above this, the device according to the second exemplary embodiment comprises a retaining disk 52, shown in figure 10, with a central through opening for a fastening projection. The retaining disk 52 also has an insertion section 54, into which the insertion section 48 of the first fastening element 10' can be inserted. Over and above this, on its upper side the retaining disk 52 has an elastic contacting section 56, which enables vertical tolerance compensation in the mounted position. As shown in figure 11, the first fastening element 10', in the state preliminarily connected to the second fastening element 24, can be inserted into the insertion section 54 of the retaining disk 52 by way of its insertion section 48. The locking projections 50 of the insertion section 48, in this case, lock into corresponding locking receptions of the retaining disk 52 (not shown). In this preliminarily connected together state of the fastening elements 10', 24 with the retaining disk 52 shown in figure 11, a spacing 58 for a component is formed between the contacting disk 12' and the elastic contacting disk 56 of the retaining disk 52.

To mount the component 36 on the carrier component 42, the first fastening element 10', in the state preliminarily connected to the second fastening element 24, is initially pushed through the through opening 38 of the component 36 by way of its insertion section 48. The retaining disk 52 can then be placed onto the insertion section 48 from the under side such that the locking projections 50 of the insertion section 48 lock in the corresponding locking receptions of the insertion section 54 of the retaining disk 52, as shown in figure 12. In this state, the device is preliminarily mounted on the component 36. From this state, the device can then once again be mounted on the carrier part 42 in the manner explained above in regard to figures 6 to 8, wherein, contrary to the finally mounted position in figure 8, in the case of the exemplary embodiment according to figures 9 to 12, after mounting the retaining disk 52 is situated between the under side of the component 36 and the upper side of the carrier component 42. Demounting can be effected as explained above in regard to the first exemplary embodiment.

## Claims

1. Device for fastening a component on a carrier component, wherein the component comprises a through opening and the carrier component comprises a fastening projecting being guidable through the through opening,
- comprising a first fastening element (10, 10') and a second fastening element (24), wherein first and second fastening elements (10, 10', 24) can be preliminarily connected together and in the state preliminarily connected together form a reception (34), with which they can be placed on the fastening projection (40) when the fastening projection (40) of the carrier component (42) is guided through the opening (38) of the component (36), and wherein at least one of the fastening elements (10, 10', 24) comprises at least one contacting surface (30),
- wherein the reception (34) for the fastening projection (40) reduces when a pressure is exerted on the at least one contacting surface (30) when the fastening elements (10, 10', 24) being preliminarily connected together are placed on the fastening projection (40), so that the fastening elements (10, 10', 24) are fastened on the fastening projection (40), **characterised in that**
- the first and/or the second fastening element (10, 10', 24) comprises an elastic contacting disk (12) with a contacting surface for contacting a first surface of the component (36).

2. Device according to claim 1, **characterized in that** the fastening elements (10, 10', 24) lock together in the preliminarily connected together state.

3. Device according to claim 1 or claim 2, **characterized in that** the first and second fastening element (10, 10', 24) can be pushed into one another for the preliminary connection.

4. Device according to one of the preceding claims, **characterized in that** it further comprises a fastening tool (46), which can be pushed onto the at least one contacting surface (30) for fastening the fastening elements (10, 10', 24) on the fastening projection (40) when the fastening elements (10, 10', 24) being preliminarily connected together are placed on the fastening projection (40).

5. Device according to claim 4, **characterized in that** the fastening tool (46) can be pushed onto the fastening elements (10, 10', 24) in the direction of the carrier component (42).

6. Device according to claims 4 to 5, **characterized in that** the fastening elements (10, 10', 24) are further pushed into one another upon pushing of the fastening tool (46).

7. Device according to one of the preceding claims, **characterized in that** the fastening elements (10, 10', 24) lock with one another in the state being fastened on the fastening projection (40).

8. Device according to one of the preceding claims, **characterized in that** the at least one contacting surface (30) comprises at least one surface (30) being inclined with regard to the insertion direction of the fastening projection (40) into the reception (34) of the fastening elements (10, 10', 24) or at least one conical surface.

9. Device according to one of the preceding claims, **characterized in that** the fastening projection (40) is a fastening bolt (40).

10. Device according to one of the preceding claims, **characterized in that** the fastening projection (40) comprises an outer thread (44) or at least one locking element, wherein at least one of the fastening elements (10, 10', 24) engage with the outer thread (44) or the at least one fastening element (50) in the state being fastened on the fastening projection (40).

11. Device according to claim 10, **characterized in that** the fastening elements (10, 10', 24) can be screwed off the fastening projection (40) for demounting of the component (36).

12. Device according to one of the preceding claims, **characterized in that** the first and/or the second fastening element (10, 10', 24) comprises a contacting surface for contacting a first surface of the component (36) and **in that** the device further comprises a holding disk (52) with a through opening for the fastening projection (40) and with a contacting surface for contacting a second surface of the component (36) being opposite to the first surface, wherein preliminary connecting means are provided, with which the fastening elements (10, 10', 24) in the state being preliminarily connected together and the holding disk (52) can be preliminarily connected together without the fastening projection (40), each in the state contacting the component (36).

13. Device according to claim 12, **characterized in that** the preliminary connecting means comprise a locking means.

14. Device according to claim 13, **characterized in that** the first and/or the second fastening element (10, 10', 24) comprises an insertion section (48) with a through opening and with at least one locking element (50) and **in that** the holding disk (52) comprises an insertion section (54) with a through opening and with at least one locking element corresponding to the at least one locking element (50) of the insertion section (48) of the first and/or second fastening element (10, 10', 24) wherein the insertion section (48) of the first and/or second fastening element (10, 10', 24) and the insertion section (54) of the holding disk (52) can be inserted into one another wherein the locking elements (50) lock with one another for preliminarily connecting the fastening elements (10, 10', 24) and the holding disk (52).

## Patentansprüche

1. Vorrichtung zum Befestigen eines Bauteils an einem Trägerbauteil, bei der das Bauteil eine durchgehende Öffnung und das Trägerbauteil einen durch die durchgehende Öffnung einführbaren Befestigungsvorsprung umfasst, umfassend:
- ein erstes Befestigungselement (10, 10') und ein zweites Befestigungselement (24), wobei die ersten und zweiten Befestigungselemente (10, 10', 24) vorläufig miteinander verbunden werden können und im Zustand des vorläufig miteinander Verbundenseins eine Aufnahme (34) bilden, wodurch sie auf dem Befestigungsvorsprung (40) platziert werden können, wenn der Befestigungsvorsprung (40) des Trägerbauteils (42) durch die Öffnung (38) des Bauteils (36) eingeführt wird, und wobei mindestens eines der Befestigungselemente (10, 10', 24) mindestens eine Kontaktoberfläche (30) umfasst,
- wobei sich die Aufnahme (34) für den Befestigungsvorsprung (40) durch Druckausübung auf die mindestens eine Kontaktoberfläche (30) reduziert, wenn die vorläufig miteinander verbundenen Befestigungselemente (10, 10', 24) auf dem Befestigungsvorsprung (40) platziert werden, so dass die Befestigungselemente (10, 10', 24) auf dem Befestigungsvorsprung (40) befestigt werden, **dadurch gekennzeichnet, dass**
- das erste und/oder das zweite Befestigungselement (10, 10', 24) eine elastische Kontaktscheibe (12) mit einer Kontaktoberfläche für einen Kontakt mit einer ersten Oberfläche des Bauteils (36) umfasst.

2. Vorrichtung nach Anspruch 1, **dadurch gekennzeichnet, dass** die Befestigungselemente (10, 10', 24) im vorläufig miteinander verbundenen Zustand miteinander verriegelt sind.

3. Vorrichtung nach Anspruch 1 oder Anspruch 2, **dadurch gekennzeichnet, dass** das erste und zweite Befestigungselement (10, 10', 24) ineinander geschoben werden können, um die vorläufige Verbindung herzustellen.

4. Vorrichtung nach einem der vorstehend aufgeführten Ansprüche, **dadurch gekennzeichnet, dass** sie weiterhin ein Befestigungswerkzeug (46) umfasst, das auf die mindestens eine Kontaktoberfläche (30) geschoben werden kann, um die Befestigungselemente (10, 10', 24) auf dem Befestigungsvorsprung (40) zu befestigen, wenn die vorläufig miteinander verbundenen Befestigungselemente (10, 10', 24) auf dem Befestigungsvorsprung (40) platziert werden.

5. Vorrichtung nach Anspruch 4, **dadurch gekennzeichnet, dass** das Befestigungswerkzeug (46) in der Richtung des Trägerbauteils (42) auf die Befestigungselemente (10, 10', 24) aufgeschoben werden kann.

6. Vorrichtung nach den Ansprüchen 4 bis 5, **dadurch gekennzeichnet, dass** die Befestigungselemente (10, 10', 24) beim Aufschieben des Befestigungswerkzeugs (46) weiterhin ineinander geschoben werden.

7. Vorrichtung nach einem der vorstehend aufgeführten Ansprüche, **dadurch gekennzeichnet, dass** sich die Befestigungselemente (10, 10', 24), wenn sie sich im befestigten Zustand auf dem Befestigungsvorsprung (40) befinden, miteinander verriegeln.

8. Vorrichtung nach einem der vorstehend aufgeführten Ansprüche, **dadurch gekennzeichnet, dass** die mindestens eine Kontaktoberfläche (30) mindestens eine Oberfläche (30), die im Verhältnis zur Richtung der Einführung des Befestigungsvorsprungs (40) in die Aufnahme (34) der Befestigungselemente (10, 10', 24) geneigt ist, oder mindestens eine konische Oberfläche umfasst.

9. Vorrichtung nach einem der vorstehend aufgeführten Ansprüche, **dadurch gekennzeichnet, dass** der Befestigungsvorsprung (40) ein Befestigungsbolzen (40) ist.

10. Vorrichtung nach einem der vorstehend aufgeführten Ansprüche, **dadurch gekennzeichnet, dass** der Befestigungsvorsprung (40) ein Außengewinde (44) oder mindestens ein Verriegelungselement umfasst, wobei mindestens eines der Befestigungselemente (10, 10', 24) in das Außengewinde (44) oder das Befestigungselement (50) im auf dem Vorsprung (40) befestigten Zustand eingreift.

11. Vorrichtung nach Anspruch 10, **dadurch gekennzeichnet, dass** die Befestigungselemente (10, 10', 24) vom Befestigungsvorsprung (40) abgeschraubt werden können, um das Bauteil (36) abzubauen.

12. Vorrichtung nach einem der vorstehend aufgeführten Ansprüche, **dadurch gekennzeichnet, dass** das erste und/oder das zweite Befestigungselement (10, 10', 24) eine Kontaktoberfläche für einen Kontakt mit einer ersten Oberfläche des Bauteils (36) umfasst, und dass die Vorrichtung weiterhin eine Haltescheibe (52) mit einer durchgehenden Öffnung für den Befestigungsvorsprung (40) sowie mit einer Kontaktoberfläche für einen Kontakt mit einer zweiten Oberfläche des Bauteils (36) gegenüber der ersten Oberfläche umfasst, wobei vorläufige Verbindungsmittel bereitgestellt werden, durch die die Befestigungselemente (10, 10', 24) im vorläufig miteinander verbundenen Zustand und die Haltescheibe (52) ohne den Befestigungsvorsprung (40), jeweils im Zustand eines Kontakts mit dem Bauteil (36), vorläufig miteinander verbunden werden können.

13. Vorrichtung nach Anspruch 12, **dadurch gekennzeichnet, dass** die vorläufigen Verbindungsmittel ein Verriegelungsmittel umfassen.

14. Vorrichtung nach Anspruch 13, **dadurch gekennzeichnet, dass** das erste und/oder das zweite Befestigungselement (10, 10', 24) einen Einführungsbereich (48) mit einer durchgehenden Öffnung und mit mindestens einem Verriegelungselement (50) umfasst, und dass die Haltescheibe (52) einen Einführungsbereich (54) mit einer durchgehenden Öffnung und mit mindestens einem Verriegelungselement umfasst, das dem mindestens einen Verriegelungselement (50) des Einführungsbereichs (48) des ersten und/oder des zweiten Befestigungselements (10, 10', 24 entspricht, wobei der Einführungsbereich (48) des ersten und/oder des zweiten Befestigungselements (10, 10', 24) und der Einführungsbereich (54) der Haltescheibe (52) ineinander eingeführt werden können, wobei die Verriegelungselemente (50) miteinander verriegeln, um die Befestigungselemente (10, 10', 24) und die Haltescheibe (52) vorläufig zu verbinden.

## Revendications

1. Dispositif pour la fixation d'un composant sur un composant formant support, le composant comprenant une ouverture traversante et le composant formant support comprenant une partie saillante de fixation pouvant être guidée à travers l'ouverture traversante,
- comprenant un premier élément de fixation (10, 10') et un second élément de fixation (24), les premier et second éléments de fixation (10, 10', 24) pouvant être raccordés les uns aux autres au préalable et formant, dans l'état où ils sont raccordés les uns aux autres au préalable, un espace de réception (34), avec lequel ils peuvent être placés sur la partie saillante de fixation (40) lorsque la partie saillante de fixation (40) du composant formant support (42) est guidée à travers l'ouverture (38) du composant (36), et au moins un des éléments de fixation (10, 10', 24) comprenant au moins une surface de contact (30),
- l'espace de réception (34) pour la partie saillante de fixation (40) diminuant lorsqu'une pression est exercée sur la ou les surfaces de contact (30) lorsque les éléments de fixation (10, 10', 24) raccordés les uns aux autres au préalable sont placés sur la partie saillante de fixation (40), de telle sorte que les éléments de fixation (10, 10', 24) soient fixés sur la partie saillante de fixation (40), **caractérisé en ce que**
- le premier et/ou le second élément de fixation (10, 10', 24) comprennent un disque de contact élastique (12) comportant une surface de contact destinée à venir en contact avec une première surface du composant (36).

2. Dispositif selon la revendication 1, **caractérisé en ce que** les éléments de fixation (10, 10', 24) se verrouillent les uns avec les autres dans l'état où ils sont raccordés les uns aux autres au préalable.

3. Dispositif selon la revendication 1 ou la revendication 2, **caractérisé en ce que** les premier et second éléments de fixation (10, 10', 24) peuvent être poussés les uns dans les autres pour le raccordement préalable.

4. Dispositif selon l'une des revendications précédentes, **caractérisé en ce qu'**il comprend en outre un outil de fixation (46), qui peut être poussé sur la ou les surfaces de contact (30) afin de fixer les éléments de fixation (10, 10', 24) sur la partie saillante de fixation (40) lorsque les éléments de fixation (10, 10', 24) raccordés les uns aux autres au préalable sont placés sur la partie saillante de fixation (40).

5. Dispositif selon la revendication 4, **caractérisé en ce que** l'outil de fixation (46) peut être poussé sur les éléments de fixation (10, 10', 24) dans la direction du composant formant support (42).

6. Dispositif selon les revendications 4 et 5, **caractérisé en ce que** les éléments de fixation (10, 10', 24) sont davantage poussés les uns dans les autres lorsque l'outil de fixation (46) est poussé.

7. Dispositif selon l'une des revendications précédentes, **caractérisé en ce que** les éléments de fixation (10, 10', 24) se verrouillent les uns avec les autres dans l'état où ils sont fixés sur la partie saillante de fixation (40).

8. Dispositif selon l'une des revendications précédentes, **caractérisé en ce que** la ou les surfaces de contact (30) comprennent au moins une surface (30) qui est inclinée par rapport à la direction d'insertion de la partie saillante de fixation (40) dans l'espace de réception (34) des éléments de fixation (10, 10', 24) ou au moins une surface conique.

9. Dispositif selon l'une des revendications précédentes, **caractérisé en ce que** la partie saillante de fixation (40) est un boulon de fixation (40).

10. Dispositif selon l'une des revendications précédentes, **caractérisé en ce que** la partie saillante de fixation (40) comprend un filet extérieur (44) ou au moins un élément de verrouillage, au moins un des éléments de fixation (10, 10', 24) venant en prise avec le filet extérieur (44) ou l'au moins un des éléments de fixation (50) dans l'état où il est fixé sur la partie saillante de fixation (40).

11. Dispositif selon la revendication 10, **caractérisé en ce que** les éléments de fixation (10, 10', 24) peuvent être dévissés de la partie saillante de fixation (40) pour détacher le composant (36).

12. Dispositif selon l'une des revendications précédentes, **caractérisé en ce que** le premier et/ou le second élément de fixation (10, 10', 24) comprennent une surface de contact destinée à venir en contact avec une première surface du composant (36) et **en ce que** le dispositif comprend en outre un disque de maintien (52) comportant une ouverture traversante pour la partie saillante de fixation (40) et comportant une surface de contact destinée à venir en contact avec une seconde surface du composant (36) opposée à la première surface, des moyens de raccordement préalable étant prévus, avec lesquels les éléments de fixation (10, 10', 24), dans l'état où ils sont raccordés les uns aux autres au préalable, et le disque de maintien (52) peuvent être raccordés les uns aux autres au préalable sans la partie saillante de fixation (40), chacun dans l'état dans lequel ils sont en contact avec le composant (36).

13. Dispositif selon la revendication 12, **caractérisé en ce que** les moyens de raccordement préalable comprennent un moyen de verrouillage.

14. Dispositif selon la revendication 13, **caractérisé en ce que** le premier et/ou le second élément de fixation (10, 10', 24) comprennent une section d'insertion (48) comportant une ouverture traversante et au moins un élément de verrouillage (50) et **en ce que** le disque de maintien (52) comprend une section d'insertion (54) comportant une ouverture traversante et au moins un élément de verrouillage correspondant à l'élément ou aux éléments de verrouillage (50) de la section d'insertion (48) du premier et/ou du second élément de fixation (10, 10', 24), la section d'insertion (48) du premier et/ou du second élément de fixation (10, 10', 24) et la section d'insertion (54) du disque de maintien (52) pouvant être insérées l'une dans l'autre, les éléments de verrouillage (50) se verrouillant l'un avec l'autre pour le raccordement préalable des éléments de fixation (10, 10', 24) et du disque de maintien (52).
